Europäisches Patentamt

European Patent Office

Office européen des brevets

(11) Publication number: **0 138 776**
**B1**

# (12) EUROPEAN PATENT SPECIFICATION

(45) Date of publication of patent specification: **13.01.88**

(51) Int. Cl.⁴: **G 06 F 15/20**

(21) Application number: **84830241.0**

(22) Date of filing: **21.08.84**

(54) **Device for electronically storing and reading data, to facilitate the verification of data input into an information processing apparatus.**

(30) Priority: **09.09.83 IT 5370183 u**

(43) Date of publication of application:
**24.04.85 Bulletin 85/17**

(45) Publication of the grant of the patent:
**13.01.88 Bulletin 88/02**

(84) Designated Contracting States:
**DE FR GB**

(56) References cited:
**FR-A-2 468 161**
**FR-A-2 468 162**

**IBM TECHNICAL DISCLOSURE BULLETIN, vol. 23, no. 1, June 1980, pages 35-37, NEW YORK (US), W.K. Foster et al.: "Audio review of text"**

**IBM TECHNICAL DISCLOSURE BULLETIN, vol. 16, no. 2, July 1973, pages 500-503, NEW YORK (US), P.D. WELCH: "System for integrating and collating audio and text, and for text creation and editing"**

(73) Proprietor: **Ing. C. Olivetti & C., S.p.a.**
**Via G. Jervis 77**
**I-10015 Ivrea (IT)**

(72) Inventor: **Vittorelli, Vittore**
**Via Aldisio 10**
**I-10015 Ivrea (Torino) (IT)**

(74) Representative: **Quinterno, Giuseppe et al**
**c/o Jacobacci-Casetta & Perani S.p.A.**
**Via Alfieri, 17**
**I-10121 Torino (IT)**

Courier Press, Leamington Spa, England.

## Description

The present invention relates to a device according to the preamble of Claim 1 for facilitating the verification of data, in particular of tables of alphanumerical data, input into automatic information-processing apparatus provided with a memory, such as, for example, an electronic typewriter provided with a memory, a word processor, etc.

Automatic information-processing apparatus dedicated to the handling of text or data, or of a general type, permit the input of data and information in various formats by means of a keyboard, and the correction of any errors made during this input phase. The responsibility for checking the correctness of the information input naturally resides with the operator. However, in order to minimize the number of errors, various automatic systems for verifying the correctness of the invention supplied have been introduced, and are now widely used. For example, it is common practice to add to the input data or codes a so-called "redundancy character", generated as a function of the said code in accordance with a predetermined rule. The processing system into which these codes are input repeats this operation on the input codes or data, and can therefore detect any errors.

Verification devices have also been introduced which, in English terminology, are called "spelling check" devices. Each word introduced into a system dedicated to text processing is compared by these devices with a memorized dictionary, and the words not present in the dictionary are indicated as probable errors ("illegal words").

From FR—A—2 468 161 and FR—A—2 468 162 it is known an electronic calculator incorporating an auditive output capable of generating sounds corresponding to the numeric information or the operation instruction each time processed by the calculator. In these calculators the auditive output is capable to output each time only one numeric information fetched from the calculating registers of the calculator. In addition, the auditive output cannot be detached to be used with another apparatus.

Both the verification systems based on the generation of redundancy characters, and the "spelling check" devices operate on the assumption that, in most cases, a casual fingering error gives rise to an "illegal" code or word. However, these systems do not permit the recognition of errors when these give rise to a "legal" code or word.

In the case of texts with an overall meaning, in the event of an error, and also in the case where a "legal" word has been substituted by another, incorrect, but equally "legal" word, it is, however, quite probable that the error will become evident either when read back by the operator who has typed in the text, or to the final recipient of the said text, for the simple reason that it no longer makes sense.

Where tables of purely numerical values are being handled, another way of making it possible to pick out mistakes consists of carrying out an arithmetic operation of the values input (for example, summing all the numbers), and additionally inputting, via the keyboard, the result of this operation. The system for processing this data is instructed to repeat this operation and compare its own result with the one input via the keyboard. Any difference in the results indicates the presence of errors.

The addition of redundancy codes and the addition of control elements obtained, for example, by means of arithmetic operations carried out on the numerical values of a table, involve a supplementary preliminary operation, and are typically used in data processing.

The use of a stored dictionary for "spelling check" procedures is, however, admissible only for texts, and involves the use of high quality and costly systems.

As a result, standard secretarial practice still involves the widespread use of the more elementary procedure which consists simply of reading back what has been input. This procedure is effective for the discourse part of the input texts, due to the intrinsic semantic redundancy of these texts. However, this procedure is not well suited to tables of numeric or alphanumeric values, in which each value is in itself possible and plausible. In these conditions, the operator must compare each single element typed in and recorded with what appears in the original manuscript. This operation is in most cases tedious and expensive in terms of time and sometimes requires the involvement of two persons in the checking operation.

The object of the present invention is to provide an electronic storing and reading device intended to facilitate the verification of data, in particular tables of alphanumeric data, input into automatic information processing apparatus provided with a memory.

This object is achieved according to the present invention by means of a device of the above-specified kind, characterised in that said device is housed in a case separate from said apparatus and is connected thereto by a pluggable cable, said device including a verifying memory conditionable by said processing unit under the control of a start key included in said control means to store the data to be verified by transferring them from said apparatus memory, said processing unit being controlled by a program stored in said read only memory as to sequentially read the data stored in said verifying memory and to address said read only memory and to control said display according to the sequentially read data, said control means including at least a control key for presetting said processing unit to read the so transferred data according to a predetermined path.

Further characteristics and advantages of the device according to the invention will become apparent from the detailed description which follows of one embodiment of the invention, with reference to the attached drawings, which are supplied purely by way of non-limiting example, in which:

Figure 1 is a perspective view of a device according to the invention connected to an electronic typewriter with a memory,

Figure 2 is a view in plan form of a the device according to the invention, and

Figure 3 is a block circuit diagram of one embodiment of the device according to the invention.

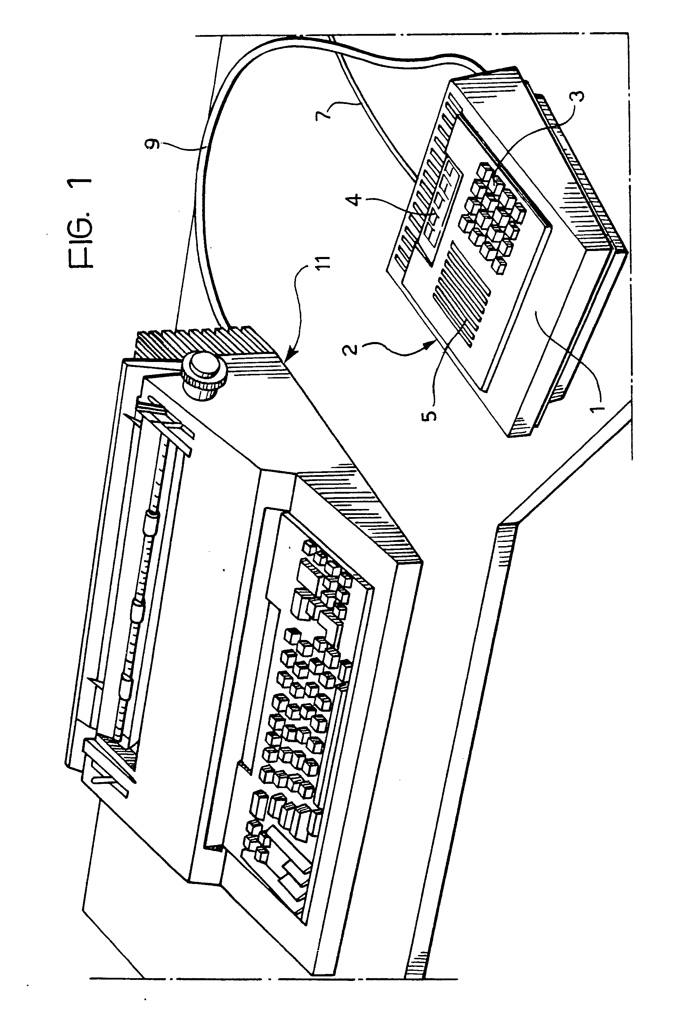

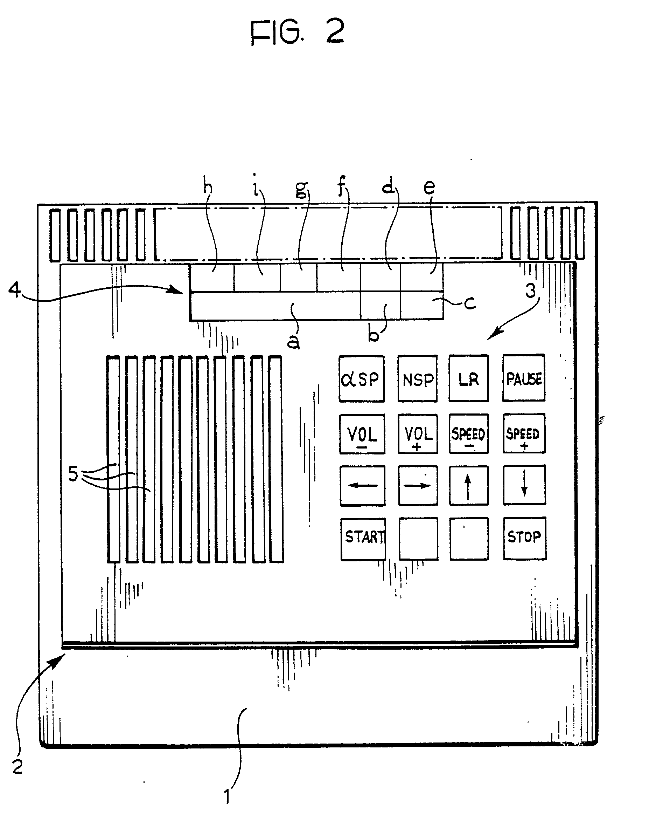

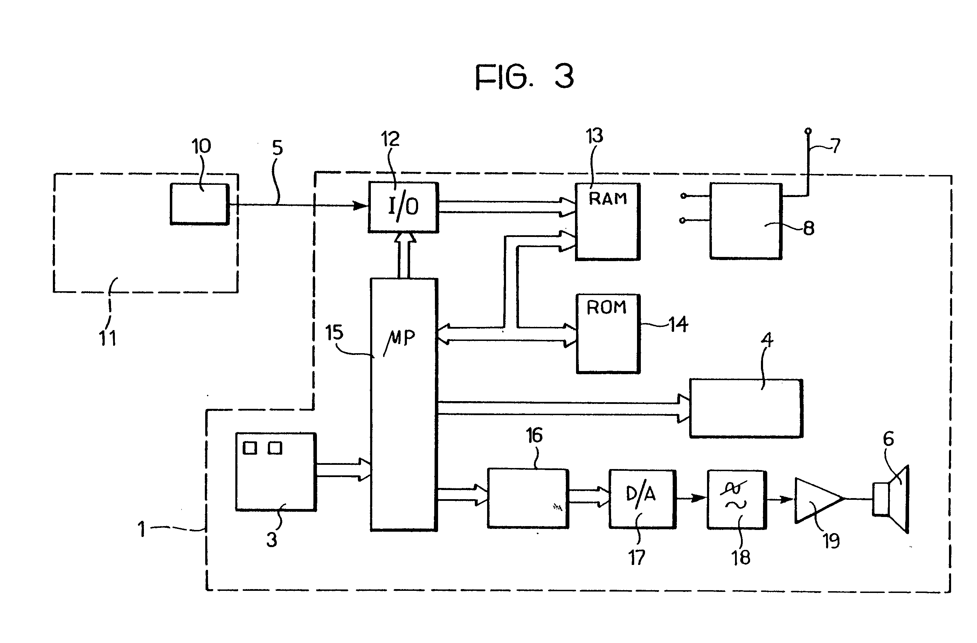

With reference to Figures 1 and 2, in the embodiment illustrated, the device according to the invention comprises a housing 1 which carries on its upper face a control console, indicated in its entirety by 2. As is shown in detail in Figure 2, this console comprises a keyboard 3, and a visual display 4, for example, of the liquid crystal type. Adjacent to the keyboard 3, the housing 1 has a series of slots behind which a loudspeaker is disposed inside the housing, this loudspeaker not being visible in Figures 1 and 2, but being indicated by 6 in Figure 3. An electrical cable 7 (Figures 1 and 3) serves to connect the input of an internal power supply 8 (Figure 3) of the device to the mains. This power supply is of the conventional type and is arranged to output the necessary d.c. voltages, both stabilized and unstabilized, for powering the circuitry of the device.

A further multi-way cable (Figures 1 and 3) enables the device of the invention to be connected to the memory 10 (Figure 3) of apparatus 11 for electronically processing data input by means of a keyboard. The apparatus 11 in the example illustrated in Figure 1 comprises an electronic typewriter provided with a memory, such as, for example, the Olivetti Mod. ET 225 typewriter. Alternatively, the apparatus 11 may comprise any other information processing apparatus such as, for example, a word processor.

As can be seen in Figure 3, the device of the invention comprises an interface unit 12, of the conventional type, for permitting the data to be verified to be transferred from the memory 10 of the apparatus 11 to a read/write memory (RAM) 13. Stored in a read only memory (ROM) 14 of the device of the invention are the parameters which represent the "prototypes" of all the words necessary to pronounce the characters used or usable for representing the data input into the apparatus 11. This involves substantially about 200 basic words, which have been individually pronounced by a human being, and pre-analyzed using a signal processing system of a conventional type: these words represent the numerals (one, two, three etc.) used to enunciate the numerals, the alphabet and the other symbols normally present on conventional alphanumerical keyboards. A microprocessor 15 is connected to the interface unit 12 and to the memories 13, 14. The microprocessor operates with these memories according to a program also contained in the read only memory 14. A voice synthesis device, of a conventional type, is connected to the microprocessor and is arranged to generate voice signals when it is supplied with an appropriate sequence of parameters. As is well known, the human voice may be represented in digital form by means of a sequence of numerical vectors (see, for example: J. D. Marckel, A. H. Gray, "Linear prediction of speech", Springer-Verlag, New York, 1976). Each numerical vector represents the sound for a certain predetermined period of time (analysis window). Among the possible representations of the voice, the one based on linear prediction makes it possible to separate and represent independently the characteristic elements or parameters of the voice, namely: the energy, the tone (or fundamental frequency), a binary value which indicates whether or not speech is present, and the frequency spectrum in the form of a certain number of "coefficients of reflection"). Linear prediction analysis makes it possible to calculate these parameters for the basic words used. These parameters are stored, as indicated above, in the read only memory 14.

In the embodiment illustrated by way of example in Figure 2, the keyboard 3 comprises sixteen keys which will, in the course of the present description, be identified with the captions or symbols with which they are labelled in this Figure.

Once the interface unit 12 of the device according to the invention, has been connected to the memory 10 of apparatus 11 of the type specified above, operation of the machine is initiated by pressing the key START, which causes a command to be passed to the microprocessor 15. The latter, by means of the interface circuit 12, controls the loading of the data contained in the memory 10 of the apparatus 11 into the memory 13. This data, corresponding to the numerals and codes of a table typed in and stored in the apparatus 11, is conveniently organized in the memory 13 as a matrix, in lines and columns. When the operation of writing into the memory 13 is complete, the operator, by pressing the key LR of the keyboard 3 can arrange for the subsequent reading aloud by the synthesizer of the data stored in the memory 13 to take place by rows or columns. The operator may also select the "reading starting point" (that is, the row and the column of the element of the table at which the reading is required to begin) using, if necessary, the keys bearing the symbols ←; →; ↓ ; ↑ . The keys ←, →, and ↓, ↑, respectively make it possible to change the column and row, at which reading is begun. Moreover, these keys make it possible, in the course of the reading, to "jump" to another element of the stored table.

The keys VOL−, VOL+ permit the volume of the synthesized voice generated by the device of the invention to be reduced or increased during operation. The keys SPEED−, SPEED+ enable the speed of diction of the voice synthesis device to be changed. The key PAUSE permits the duration of the interval between the reading of an element of the table and the reading of the subsequent element, to be selected from a predetermined number, for example 4, of possible values.

The programme stored in the memory 14 may, using conventional programming techniques, be arranged such that the operator can select various operating modes or forms of enunciation of the data. In particular, it is possible to establish a first operating mode or form of enunciation in which the voice synthesis device pronounces each character of the alphabet with its full alphabetical name; thus, for example, the sequence

BDET

in this first mode of enunciation is pronounced bee, dee, ee, and tee.

By means of programming techniques it is possible to set up the device for operation in further possible modes of enunciation in which, for example, the voice synthesis device pronounces each character of the alphabet according to a phonetic code: thus, for example, the sequence

BDET

may be pronounced as

Benjamin, David, Edward, Tommy

or, using the ICAO international phonetic code:

Bravo Delta Echo Tango.

The operator may select the desired mode of enunciation of the alphabetic characters by pressing a special selector key provided on the keyboard 3, for example the key indicated by the symbol αSP in Figure 2.

Analogously, various modes of enunciation may be provided for the numerical characters, these too being selectable by means of a special selector key, for example, the key NSP of Figure 2. Thus, for example, in a first mode of enunciation of the numeric characters, the sequence

1250

is pronounced by the voice synthesis device as One thousand two hundred and fifty.

In a second mode of enunciation, the same sequence may be pronounced for example in the following way:

one two five zero.

The keyboard 3 includes a further control key (the STOP key of Figure 2) which enables the operation of the device to be interrupted when it is running.

The visual display 4 is advantageously subdivided into a plurality of fields. In the embodiment shown in Figure 2, this display is subdivided into nine fields, indicated by a, b . . . i intended to provide, in order,

a: an alphanumeric representation of the table element being read and pronounced at any given time by the synthesis device,

b, c: an indication respectively of the row and column of the table element which at any given time is being read and pronounced,

d, e: an indication respectively of the selected volume and speed of enunciation,

f: an indication of the pause duration selected,

g: an indication of the reading mode, by rows or columns, selected,

h, i: an indication of the mode of enunciation selected respectively for alphabetical characters and, for numeric characters.

The individual fields of the display 4 are controlled by the microprocessor 15 in accordance with the commands input through the keyboard 3 and the data which at any given time is being read and pronounced.

The device according to the invention may be realised as an independent module or unit, as is shown by way of example in the attached drawings, or, alternatively, may be incorporated into a processing apparatus or system.

The device according to the invention considerably simplifies the verification of tables of codes, alphanumeric values, etc. contained in the memory of a processing system: the device reads aloud each element of the table and, as indicated above, the operator checks the correctness simply by comparing what he hears with what appears in the original manuscript.

**Claims**

1. A device for facilitating the verification of input data into a data storing or processing apparatus (11) including a memory (10) and a keyboard for inputting said data into said memory (10), said device including a voice synthesizer (6, 14, 16—19) provided with an electroacoustic output transducer (6), an addressable read only memory (14) storing digital parameters representing the pronunciation of characters used in said data, and a digital-analog converter (17) controlled by said read only memory (14) for causing said transducer (6) to generate sounds corresponding to said pronunciation, a visual display (4) being arranged to display said data while said transducer (6) generates said sounds under the control of a processing unit (15) conditioned by manually operable control means (3), characterized in that said device is housed in a case (1) separate from said apparatus (11) and is connected thereto by a pluggable cable (9), said device including a verifying memory (13) conditionable by said processing unit (15) under the control of a start key (START) included in said control means (3) to store the data to be verified by transferring them from said apparatus memory (10), said processing unit (15) being controlled by a program stored in said read only memory (14) as to sequentially read the data stored in said verifying memory (13) and to address said read only memory (14) and to control said display according to the sequentially read data, said control means (3) including at least a control key (LR) for presetting said processing unit (15) to read the so transferred data according to a predetermined path.

2. A device according to claim 1, particularly for verifying tables of multicharacter data organised in rows and columns, characterized in that said processing unit (15) is presettable by said control key (LR) for reading the data stored in said verifying memory by rows or by columns.

3. A device according to claim 2, characterised in that, said control means (3) also comprise position selecting means operable for selecting the row or column of said table to be read by said processing unit (15).

4. A device according to claim 3, characterised in that said processing unit (15) is adapted to cause said visual display (4, b, c) to display an indication of the row and column of data being read and pronounced at any given time.

5. A device according to claim 4, wherein said control means include first means (SPEED) for adjusting the speed of pronunciation of individual elements of data, second means (VOL) for adjusting the volume of the sounds generated by said transducer (6), and third means (PAUSE) for adjusting the duration of the pause between the readings of consecutive data of said table, characterised in that said processing unit (15) is conditioned by said first, second and third means for causing said display unit (4; e, d, f) to display indications corresponding respectively to said speed, volume and duration.

6. A device according to claims 4 or 5, characterised in that said control means (3) further comprises means (αSP) for setting the said processing unit (15) into a first operating mode or form of enunciation, in which the said voice synthesizer pronounces each character of the alphabet with its full name.

7. A device according to claim 6, characterised in that said control means (3) further comprises means (αSP) for setting the said processing unit (15) into a second operating mode or form of enunciation, in which the said voice synthesizer pronounces each character of the alphabet according to a pre-established phonetic code.

8. A device according to any claim from 4 to 6, characterised in that said control means further comprises means (NSP) for setting the said processing unit (15) into a plurality of operating modes or forms of enunciation, in which the said voice synthesizer pronounces sequences of numeric characters according to predetermined forms.

**Patentansprüche**

1. Vorrichtung zur Erleichterung der Überprüfung von Eingabedaten in einem Datenspeicher- oder Verarbeitungsgerät (11) mit einem Speicher (10) und einer Tastatur zur Eingabe der genannten Daten in den Speicher (10), enthaltend einen Stimmsynthetisierer (6, 14, 16—19), der mit einem elektroakustischen Ausgangswandler (6) versehen ist, einen adressierbaren NUR-Lesespeicher (14), der digitale Parameter speichert, die die Aussprache von in den Daten verwendeten Zeichen repräsentieren, und einen von dem NUR-Lesespeicher (14) gesteuerten Digital/Analog-Wandler (17), der veranlaßt, daß der Ausgangswandler (6) Töne entsprechend der genannten Aussprache erzeugt, wobei eine optische Anzeigeeinrichtung (4) dazu vorgesehen ist, die genannten Daten anzuzeigen, während der Ausgangswandler (6) die Töne unter Steuerung durch eine Prozessoreinheit (15) erzeugt, die durch manuell betätigbare Steuereinrichtungen (3) konditioniert ist, dadurch gekennzeichnet, daß die Vorrichtung in einem von dem genannten Gerät (11) getrennten Gehäuse (1) untergebracht ist und mit dem Gerät durch ein steckbares Kabel (9) verbunden ist, wobei die Vorrichtung einen Prüfspeicher (13) enthält, der durch die Prozessoreinheit (15) unter Steuerung durch eine Start-Taste (START), die Bestandteil der Steuereinrichtung (3) ist, konditionierbar ist, um die zu prüfenden Daten durch Übertragung derselben aus dem Gerätespeicher (11) zu speichern, wobei die Prozessoreinheit (15) durch ein in dem genannten NUR Lesespeicher (14) gespeicherten Programm so gesteuert wird, daß sie die in dem Prüfspeicher (13) gespeicherten Daten sequentiell ausliest und den NUR-Lesespeicher (14) adressiert und die Anzeigeeinrichtung entsprechend den sequentiell ausgelesenen Daten steuert, wobei die Steuer-einrichtung (3) wenigstens eine Steuertaste (LR) zur Voreinstellung der Prozessoreinheit (15) enthält, damit die die so übertragenen Daten entsprechend einem vorgegebenen Weg liest.

2. Vorrichtung nach Anspruch 1, speziell zur Überprüfung von Tabellen aus Mehrzeichendaten, die in Reihen und Spalten aufgebaut sind, dadurch gekennzeichnet, daß die Prozessoreinheit (15) durch die Steuertaste (LR) zum Auslesen der in dem Prüfspeicher gespeicherten Daten in Reihen oder Spalten voreinstellbar ist.

3. Vorrichtung nach Anspruch 2, dadurch gekennzeichnet, daß die Steuereinrichtung (3) auch eine Positionswähleinrichtung enthält, die zur Auswahl der Reihe oder Spalte aus der von der Prozessoreinheit (15) zu lesenden Tabelle betätigbar ist.

4. Vorrichtung nach Anspruch 3, dadurch gekennzeichnet, daß die Prozessoreinheit (15) dazu eingerichtet ist, die optische Anzeigeeinrichtung (4, b, c) zu veranlassen, einen Hinweis auf die Reihe oder Spalte der gelesenen und ausgesprochenen Daten zu jedem gegebenen Zeitpunkt anzuzeigen.

5. Vorrichtung nach Anspruch 4, bei der die Steuereinrichtung eine erste Einrichtung (SPEED) zur Einstellung der Ausprachegeschwindigkeit

einzelner Elemente der Daten, eine zweite Einrichtung (VOL) zur Einstellung der Lautstärke der von dem Wandler (6) erzeugten Töne, und eine dritte Einrichtung (PAUSE) zur Einstellung der Dauer der Pause zwischen den Auslesungen aufeinanderfolgender Daten aus der Tabelle aufweist, dadurch gekennzeichnet, daß die Prozessoreinheit (15) durch die ersten, zweiten und dritten Einrichtungen so konditioniert wird, daß die Anzeigeeinheit (4; e, d, f) die Angaben entsprechend der Geschwindigkeit, der Lautstärke bzw. Dauer anzeigt.

6. Vorrichtung nach Anspruch 4 oder 5, dadurch gekennzeichnet, daß die Steuereinrichtung (3) weiterhin eine Einrichtung (αSP) zur Einstellung der Prozessoreinheit (15) in eine erste Betriebsart oder Artikulationsform aufweist, in der der Stimmsynthesizer jeden Buchstaben des Alphabets mit seinem vollen Namen ausspricht.

7. Vorrichtung nach Anspruch 6, dadurch gekennzeichnet, daß die Steuereinrichtung (3) weiterhin eine Einrichtung (αSP) zur Einstellung der Prozessoreinheit (15) in eine zweite Betriebsart oder Artikulationsform, in der der Stimmsynthesizer jeden Buchstaben des Alphabets entsprechend einem voreingestellten phonetischen Code ausspricht, aufweist.

8. Vorrichtung nach einem der Ansprüche 4—6, dadurch gekennzeichnet, daß die Steuereinrichtung weiterhin eine Einrichtung (NSP) zum Einstellen der Prozessoreinheit (15) in mehrere Betriebsarten oder Artikulationsformen aufweist, in denen der Stimmsynthesizer Folgen von numerischen Zeichen entsprechend vorbestimmten Formen ausspricht.

## Revendications

1. Dispositif pour faciliter la vérification de données d'entrée dans un appareil de mémorisation ou de traitement de données (11) incluant une mémoire (10) et un clavier pour introduire les données dans la mémoire (10), le dispositif incluant un synthétiseur de la parole (6, 14, 16—19) pourvu d'un transducteur électro-acoustique de sortie (6), d'une mémoire morte adressable (14) mémorisant des paramètres numériques représentant la prononciation des caractères utilisés dans les données, et un convertisseur numérique-analogique (17) commandé par la mémoire morte (14) pour que le transducteur (6) produise des sons correspondant à la prononciation, un dispositif d'affichage (4) étant agencé pour afficher les données alors que le transducteur (6) produit les sons sous la commande d'une unité de traitement (15) conditionnée par un moyen de commande pouvant être actionné manuellement (3), caractérisé en ce que le dispositif est logé dans un boîtier (1) séparé de l'appareil (11) et est connecté à celui-ci par un câble enfichable (9), le dispositif incluant une mémoire de vérification (13) pouvant être conditionnée par l'unité de traitement (15) sous la commande d'une touche de marche (MARCHE) incluse dans le moyen de commande pour mémoriser les données à vérifier en les transférant à partir de la mémoire d'appareil (10), l'unité de traitement (15) étant commandée par un programme mémorisé dans la mémoire morte (14) de manière à lire séquentiellement les données mémorisées dans la mémoire de vérification (13) et à adresser la mémoire morte (14) et commander le dispositif d'affichage selon les données lues séquentiellement, le moyen de commande (3) incluant au moins une touche de commande (LR) pour prérégler l'unité de traitement (15) afin qu'elle lise les données ainsi transférées selon une voie prédéterminée.

2. Dispositif selon la revendication 1, destiné en particulier à la vérification de tableaux de données à plusieurs caractères organisés en lignes et en colonnes, caractérisé en ce que l'unité de traitement (15) peut être préréglée par la touche de commande (LR) pour lire les données mémorisées dans la mémoire de vérification par lignes ou par colonnes.

3. Dispositif selon la revendication 2, caractérisé en ce que le moyen de commande (3) comprend également des moyens de sélection de position pouvant être mis en fonctionnement pour sélectionner la ligne ou la colonne du tableau à lire par l'unité de traitement (15).

4. Dispositif selon la revendication 3, caractérisé en ce que l'unité de traitement (15) est agencée pour que le dispositif d'affichage (4, b, c) affiche une indication de la ligne ou de la colonne de données lues et prononcées à n'importe quel temps donné.

5. Dispositif selon la revendication 4, dans lequel le moyen de commande comprend un premier moyen (VITESSE) pour régler la vitesse de prononciation des éléments séparés de données, un deuxième moyen (VOL) pour régler le volume des sons produits par le transducteur (6), et un troisième moyen (PAUSE) pour régler la durée de la pause entre les lectures de données consécutives du tableau, caractérisé en ce que l'unité de traitement (15) est conditionnée par les premier, deuxième et troisième moyens pour que l'unité d'affichage (4; e, d, f) affiche des indications correspondant respectivement à la vitesse, au volume et à la durée.

6. Dispositif selon l'une quelconque des revendications 4 et 5, caractérisé en ce que le moyen de commande (3) comprend en outre un moyen (αSP) pour régler l'unité de traitement (15) dans un premier mode de fonctionnement ou une première forme de prononciation, où le synthétiseur de la parole prononce chaque caractère de l'alphabet avec son nom complet.

7. Dispositif selon la revendication 6, caractérisé en ce que le moyen de commande (3) comprend en outre un moyen (αSP) pour régler l'unité de traitement (15) dans un deuxième mode de fonctionnement ou dans une deuxième forme de prononciation, où le synthétiseur de la parole prononce chaque caractère de l'alphabet selon un code phonétique pré-établi.

8. Dispositif selon l'une quelconque des revendications 4 à 6, caractérisé en ce que le moyen de commande comprend en outre un moyen (NSP) pour régler l'unité de traitement (15) dans un ensemble de modes de fonctionnement ou un ensemble de formes de prononciation où le synthétiseur de la parole prononce des séries de caractères numériques selon des formes prédé-terminées.

FIG. 1

9

7

3

4

11

2

5

1

# FIG. 2

FIG. 3